# EUROPEAN PATENT SPECIFICATION

(11) **EP 3 460 705 B1**
(45) Date of publication and mention of the grant of the patent: **12.07.2023**
(21) Application number: 17192894.8
(22) Date of filing: 25.09.2017
(51) Int. Cl.: G06F 21/57, G06F 21/71

(54) **DISTRIBUTED DEPLOYMENT OF UNIQUE FIRMWARE**
VERTEILTER EINSATZ VON EINZIGARTIGER FIRMWARE
DÉPLOIEMENT DISTRIBUÉ DE MICROLOGICIEL UNIQUE

(43) Date of publication of application: 27.03.2019
(73) Proprietor: Siemens Aktiengesellschaft, 80333 München (DE)
(72) Inventor: Aschauer, Hans, 81829 München (DE); Falk, Rainer, 85586 Poing (DE); Feist, Christian Peter, 80689 München (DE); Schneider, Daniel, 80796 München (DE)
(74) Representative: Siemens Patent Attorneys

(56) References cited:
- US-A1- 2012 167 205
- US-A1- 2013 268 746
- US-A1- 2017 185 781

## Description

### Technical field

Various embodiments of the invention generally relate to deploying firmware. Specifically, various embodiments of the invention relate to securely deploying firmware to avoid unauthorized tampering with the firmware.

### Background

Many devices include microcontrollers or integrated circuits of various kinds, i.e., generally, processor circuitries. Applications executed by such processor circuitry often include safety- and security-relevant operations. Therefore, the system software image (sometimes also referred to as firmware image, or simply firmware) needs to be protected. Such protection includes avoiding unauthorized access by third-party attackers.

US 2017/185781A discloses a system-on-chip including an application processor and a communication processor.

One technique of protecting firmware includes associating the firmware with security-relevant features. In one example, the firmware can be made hardware-specific, i.e., uniquely associated with the particular processor circuitry on which the firmware is installed. This avoids unauthorized copying of the firmware to other processor circuitries. Other techniques of protecting firmware against unauthorized access include provisioning firmware-specific control data, e.g., based on cryptographic keys. All such techniques rely on avoiding the use of a generic firmware that can be copied or altered by an unauthorized third-party attacker. Rather, a unique firmware is provided.

However, such techniques face certain restrictions and drawbacks. Whenever generic firmware cannot be used, production and deployment of the processor circuitry can be more complex. For example, it may not be simply possible to deploy a generic firmware across multiple processor circuitries; rather, it is typically required to provide off-line resources to tailor the firmware to each particular processor circuitry. This may be expensive, time-consuming, and error-prone.

### Summary

Therefore, there is a need for advanced techniques of deploying firmware. Specifically, there is a need for techniques of deploying unique firmware which overcome or mitigate at least some of the above-identified limitations and drawbacks. There is a need for advanced techniques of deploying firmware which avoid unauthorized tampering with the firmware.

This need is met by the features of the independent claims. The features of the dependent claims define embodiments.

A method of operating a processor circuitry includes loading a first firmware from a non-volatile memory. The method also includes executing the first firmware. The method further includes generating a second firmware. The method also includes writing the second firmware to the non-volatile memory.

The method further includes, in response to said generating of the second firmware: disabling further repetitions of said executing of the first firmware.

Execution of the first firmware, in other words, enables generation the second firmware. For example, the second firmware may be generated from the first firmware, i.e., by adapting the first firmware. It would also be possible that the second firmware is generated from a third firmware which is different from the first firmware. For example, the third firmware could be loaded via an interface. This may help to replace the first firmware - which may be generic - by the uniquely identified second firmware. Thereby, different processor cuitries may employ different second firmwares, but may employ a common first firmware.

Using the first firmware and then disabling further repetitions of said executing of the first firmware helps to implement the first firmware as one-time executable. Thereby, protection against unauthorized reproduction, increased security against unauthorized tampering and avoidance of off-line manipulation attacks may be provided. Specifically, the low-security first firmware may be executed for the purpose of generating the high-security second firmware.

In some examples, the second firmware may be generated from the first firmware. Alternatively or additionally, the second firmware may be generated from a third firmware which is different from the first and second firmwares. Here, the second firmware may be uniquely identified, i.e., may be unique. Differently, the first firmware and/or the third firmware may be generic, i.e., not uniquely identified.

Such transition of the generic first firmware and/or third firmware into the unique second firmware helps to protect against unauthorized reproduction, increases security against unauthorized tampering and avoids off-line manipulation attacks.

The second firmware is uniquely associated with the processor circuitry, while the first firmware and/or the third firmware may not be uniquely associated with the processor circuitry. Hence, the second firmware may be hardware-specific and intrinsically linked to the processor circuitry; while the second firmware - or the third firmware, if the second firmware is generated from the third firmware - may be generic and not linked to the processor circuitry. Such hardware-specific tailoring of the second firmware helps to avoid unauthorized reproduction of the firmware for execution on other processor circuitries.

The hardware-specific tailoring may be achieved in a two-step process: (I) initially, the first firmware which is generic is deployed which facilitates practical handling at the factory. (II) then, the second firmware is generated, e.g., from the first firmware or the third firmware, the second firmware being hardware-specific by implementing a binding to a hardware-specific instance of the processor circuitry. Typical hardware-specific information may include so-called key blobs. A key blob may be a device-specific encrypted key which can be loaded and decrypted by the dedicated processor circuitry only. It can be stored in non-volatile memory.

In the various scenarios described herein, different techniques may be applied in isolation or combination to implement the unique association of the second firmware with the processor circuitry. One example includes encrypting the first firmware using a cryptographic key, the cryptographic key being uniquely associated with the processor circuitry, to thereby generate the second firmware. Alternatively or additionally, it would also be possible to encrypt the third firmware using the cryptographic key.

For example, the first firmware and/or the third firmware can be encrypted using a hardware-specific cryptographic key (or simply key, for sake of brevity). The hardware-specific key may include a hardware key of the processor circuitry, i.e., a key which is persistently stored in a hardware element of the processor circuitry, e.g., of a central processing unit, a security module, a crypto controller module, etc. If the key is only present at the processor circuitry, it is possible to convert the generic first firmware or third firmware to the hardware-specific second firmware based on the key. In one scenario, the hardware-specific key is fixed, i.e., persistently associated with the processor circuitry. In another scenario, it would be possible that the method also includes generating the cryptographic key when generating the second firmware. This may allow for encrypting an updated second firmware - e.g., a firmware update according to new releases - with a cryptographic key which is not specific for the particular version of the firmware update.

Such techniques of encrypting using the cryptographic key may also be combined with re-encrypting the firmware. For example, it would be possible that the method includes decrypting the first firmware or the third firmware using a further cryptographic key which is not uniquely associated with the processor circuitry, and then encrypting the first firmware or the third firmware using the cryptographic key uniquely associated with the processor circuitry.

In a further example, the method may include generating control data based on the first firmware and embedding/injecting the control data in the first firmware to generate the second firmware. Alternatively or additionally, it would also be possible to generate control data based on the third firmware and embed the control data in the third firmware to generate the second firmware. For example, the control data may include one or more of the following: cryptographic checksums, process reference lists, hash values. For this reason, the control data may also be referred to as runtime integrity reference integrity data: at runtime, the integrity of the second firmware can be checked based on the control data. The integrity of the control data may be protected based on a hardware-specific cryptographic key which is uniquely associated with the processor circuitry. For this reason, the first firmware or the third firmware may have access to a private cryptographic key used for cryptographically signing the control data. The signed control data can then be verified by the second firmware using the associated public cryptographic key. The public key may also be uniquely associated with the processor circuitry. It would be possible that the public key is embedded into the first firmware or the third firmware when generating the second firmware, along with the control data.

As a general rule, the various techniques described herein regarding the generation of the second firmware may include adaptation of the first firmware or the third firmware on different levels. Typically, firmware may include, at the lowest level, boot loader data which is used to load a kernel. The kernel, sometimes also referred to as operating system, may provide interfacing to one or more hardware modules of the processor circuitry. The kernel may also implement a runtime environment. Based on the runtime environment, application data of the respective firmware associated with one or more applications, can be executed. It would be possible that the second firmware is generated from the first firmware by selectively adapting a partition of the first firmware which includes the runtime environment for executing application executables. Optionally, partitions of the first firmware including the boot loader and the kernel may not be adapted. Alternatively or additionally, it would be possible to adapt a partition of the third firmware which includes the runtime environment; here, likewise, the partitions of the third firmware including bootloader and kernel may not be adapted.

It would be possible that the boot loader and the kernel of the first firmware or the third firmware are already protected as part of a secure boot process (sometimes also referred to as secure boot chain). For example, pre-defined integrity control data may be provisioned which prevents any adaptation of the boot loader and the kernel. Therefore, by selectively adapting the higher-level of the firmware including the runtime environment, interference with the pre-defined secure boot process may be avoided. By adaptation of the runtime environment, the secure boot process can be extended to also cover the higher-level of the firmware.

Generally, it is possible that - in addition or in alternative to the public cryptographic key embedded into the first firmware or the third firmware when generating the second firmware - other types of control data are used. For example, the control data may include a cryptographic hash value or a policy file.

In any case and for different types of control data, it can be helpful to write the control data to an otherwise unprotected file system of the memory. The control data may be digitally signed such that their integrity can be verified using the public cryptographic key. Thus, additional measures to protect the control data, e.g., by a specifically protected file system of the memory, may not be required. In another option, the integrity of the control data can be verified using a hash value which has been embedded into the first firmware when generating the second firmware.

Thus, generally, it is possible to generate a cryptographic check value such as a hash value or message authentication code or a digital signature when generating the second firmware. This control data may be uniquely associated with the processor circuitry; however, as a general rule, it is not required that the control data is uniquely associated with the processor circuitry.

For example, if the control data includes a digital signature, this signature may be unique - to provide a uniquely identified second firmware -, but not necessarily uniquely associated with the processor circuitry. For example, if the control data includes a checksum of the first firmware, this checksum may be unique, but not necessarily uniquely associated with the processor circuitry.

In any case, irrespective of whether the control data is uniquely associated with the hardware or not, it is possible to verify the integrity of the second firmware at a subsequent boot process of the second firmware. The kernel of the second firmware can verify the second firmware using the control data before loading the runtime environment and/or executing any application executables based on the runtime environment. Hence, a multistep secure boot process can be implemented in which the first boot phase of the processor circuitry is protected by a hardware-unspecific security parameter such as a public vendor key for verifying the signature according to reference implementations. Thus, any non-hardware-specific partitions of the second firmware can be verified according to reference implementations. This part of the secure boot process may not be affected by the techniques described herein. A second, potentially hardware-specific part of the second firmware - which has been obtained from generating the second firmware - can then be verified using the control data which is uniquely identified, and potentially uniquely associated with the processor circuitry. The control data may include a public cryptographic key which has been embedded into the second firmware or a cryptographic hash value.

In some examples, it may also be possible that the control data includes a cryptographic key for encryption of application executables to be executed in a runtime environment provided by the second firmware. For example, such application executables may correspond to application-level configuration data or project data. The cryptographic key for encryption of the application executables may be embedded into the first firmware or the third firmware when generating the second firmware.

In one option, this cryptographic key for encryption of the application executables is fixed. This has the effect that when deploying an update of the second firmware, the new second firmware can continue to execute the application executables. In another option, the cryptographic key for encryption of the application executables can be newly generated when generating the second firmware and/or when deploying any updates for the second firmware. When deploying the firmware update, the new firmware cannot execute the application executables that had been part of the previous second firmware. It would be possible to verify the first firmware or the third firmware, e.g., check version, vendor, and any flags.

Depending on the result of such verification, the cryptographic key for encryption of application executables can be maintained and be embedded; or a new cryptographic key for encryption of the application executables can be generated and embedded.

While above, various examples have been described in the context of a cryptographic key for encryption of application executables, such techniques may be alternatively or additionally also be applied for application data that is accessed by applications executed in the runtime environment.

In the various examples described herein, subsequent activation of the first firmware may be avoided. Hence, the method may include disabling further repetitions of said executing of the first firmware. Thereby, it may be ensured that executing of the first firmware is only possible once, when required for generating the second firmware.

Such disabling of further repetitions of said executing of the first firmware may be achieved by different means. For example, it would be possible that completed execution of the first firmware is hardware encoded into the processor circuitry. For example, the processor circuitry may include a fuse. Disabling further repetitions of the first firmware may include burning the fuse in response to generating the second firmware.

A further technique of disabling further repetition of the first firmware may include disconnecting an external input signal associated with said executing of the first firmware. For example, the input signal may be received via a general purpose input/output (GPIO) interface. The input signal may be set via a jumper or a separate security controller module of the processor circuitry. Using a jumper allows simple implementation and helps to ensure that setting of the jumper is only possible where manual access to the processor circuitry is available. Using a security module helps to implement security measures such as authenticating or validating a deployment code in a reliable manner without having to be physically present at the location of the processor circuitry or without having manual access to the processor circuitry, e.g., by opening a housing thereof, etc.

A further option of disabling the further repetition includes deleting the first firmware from the non-volatile memory. This may be implemented by overwriting the first firmware by the second firmware.

As will be appreciated from the above, by disabling further repetition of said executing of the first firmware, the first firmware may also be referred to as one-way disposable firmware. The second firmware may be automatically generated in response to loading a kernel of the first firmware. Thereby, the first firmware may serve the exclusive purpose of generating the second firmware. As such, the second firmware may provide limited functionality if compared to the second firmware. For example, the first firmware may not be able to execute applications using a respective runtime environment. For example, the kernel of the first firmware may not be able to address all hardware components that are addressable by the second firmware.

While above various examples have been discussed with respect to disabling further repetitions of executing the first firmware, in some scenarios in which the second firmware is generated from the third firmware, appropriate measures may be taken to avoid execution of the generic third firmware. Specifically, the measures explained above with respect to avoiding further repetitions of execution of the first firmware may alternatively or additionally be employed for avoiding execution of the third firmware. Thereby, execution of the generic third firmware is avoided; transition of the third firmware into the uniquely identified second firmware is enforced.

A computer program product includes program code that is executable by a processor circuitry. Executing the program code causes the processor circuitry to perform a method. The method includes loading a first firmware from a non-volatile memory. The method also includes executing the first firmware. The method further includes generating a second firmware. The method also includes writing the second firmware to the non-volatile memory. The method further includes, in response to said generating of the second firmware: disabling further repetitions of said executing of the first firmware. A computer program includes program code to be executed by a processor circuitry. Executing the program code causes the processor circuitry to perform a method. The method includes loading a first firmware from a non-volatile memory. The method also includes executing the first firmware. The method further includes generating a second firmware. The method also includes writing the second firmware to the non-volatile memory. The method further includes, in response to said generating of the second firmware: disabling further repetitions of said executing of the first firmware.

A processor circuitry is configured to load, from a non-volatile memory, a first firmware and to execute the first firmware. The processor circuitry is further configured to generate a second firmware based on said executing on the first firmware and to write the second firmware to the non-volatile memory. The processor circuitry is further configured to disable further repetitions of said executing of the first firmware, in response to said generating of the second firmware.

A first firmware is one-time executable. The first firmware provides for generating a second firmware. The second firmware is generated from the first firmware. The first firmware may be generic. The second firmware is uniquely identified.

A method of operating a processor circuitry includes loading a first firmware from a non-volatile memory. The method also includes executing the first firmware. The method further includes generating a second firmware. The method also includes writing the second firmware to the non-volatile memory. The first firmware is not uniquely identified. The second firmware is uniquely identified.

It is to be understood that the features mentioned above and those yet to be explained below may be used not only in the respective combinations indicated, but also in other combinations or in isolation without departing from the scope of the invention.

### Brief description of the drawings

Fig. 1 schematically illustrates a device including a processor circuitry and a non-volatile memory according to various examples.
Fig. 2 is a flowchart of a method according to various examples.
Fig. 3 is a flowchart of a method according to various examples.
Fig. 4 is a flowchart of a method according to various examples.
Fig. 5 is a flowchart of a method according to various examples.

### Detailed description of embodiments

In the following, embodiments of the invention will be described in detail with reference to the accompanying drawings. It is this to be understood that the following description of embodiments is not to be taken in a limiting sense.

The scope of the invention is not intended to be limited by the embodiments described hereinafter or by the drawings, which are to be taken illustrative only.

The drawings are to be regarded as being schematic representations and elements illustrated in the drawings are not necessarily shown to scale. Rather, the various elements are represented such that their function and general purpose becomes apparent to a person skilled in the art. Any connection or coupling between functional blocks, devices, components, or other physical or functional units shown in the drawings or described herein may also be implemented by an indirect connection or a coupling. A coupling between components may also be established over a wireless connection.

Hereinafter, techniques of deploying firmware are described. The techniques enable to uniquely adapt a generic firmware. Thus, a centralized, generic firmware can be deployed which facilitates generation of a uniquely identified firmware. For example, the generic firmware may be individually adapted or modified on a per-device basis to generate the unique firmware.

In reference implementations, uniquely adapting a firmware - e.g., by means of encryption using a cryptographic key uniquely associated with the respective processor circuitry controlled by the firmware -, includes processes that are performed prior to initially loading the firmware into the non-volatile memory of the processor circuitry for the first time. For example, uniquely adapting a firmware on a per-device basis may be performed by a central server facility as off-line resources; then, a set of uniquely adapted firmwares - all provided by the central server facility - may be written into the non-volatile memories of a plurality of processor circuitries. Hence, adaptation of a generic firmware to generate the set of uniquely identified firmwares has to be performed by the central server facility for each processor circuitry at which the unique firmware is to be deployed.

Such reference implementations can be time-consuming and may require significant hardware resources at the central server facility. Furthermore, the logistics of such a central adaptation of the firmware can be complex: this is particularly the case where the adaptation of the generic firmware to generate a unique firmware is achieved by uniquely associating the generated firmware with each processor circuitry, i.e., when deploying hardware-specific firmwares. Namely, in such a scenario, hardware-specific information uniquely associated with the respective processor circuitry may be required at the central server facility. This is typically only possible if the processor circuitry is arranged in a local network with the central server facility, to avoid unauthorized tampering by third-party attackers in this crucial stage of the firmware deployment.

The techniques described herein facilitate integration of such unique adaptation of a generic firmware into the - e.g., initial, first time - boot process of each individual processor circuitry. Thereby, the central server facility may be relieved of the task of uniquely adapting generic firmware for each one of the processor circuitries; rather, this task may be performed by each one of the processor circuitries, e.g., autonomously. This may be labelled as a distributed deployment of unique firmware, because each processor circuitry is responsible for generating the uniquely identified firmware.

Such decentralized generation of the uniquely identified firmware is, in various examples, achieved by using a one-time executable first firmware. By means of the first firmware, a bootstrapping mechanism of generating the uniquely identified second firmware is provided.

In some examples, unique adaptation of the generic first firmware to yield the unique second firmware is achieved based on executing of the first firmware, itself. By adapting the first firmware, a second firmware is generated. The second firmware - in contrast to the first firmware - is uniquely associated with the processor circuitry.

In further examples, the unique second firmware is generated by adapting at third firmware - which is not executed for the purpose of generating the second firmware. Thus, the first firmware may provide the functionality of retrieving the third firmware, e.g., via an external interface or from a memory.

Optionally, it is possible to set an indication or mark regarding one-time execution of the first firmware and the associated adaptation of the first firmware when generating the second firmware. Thereby, further repetitions of said executing of the first firmware may be disabled. Such disabling of further repetitions of said executing of the first firmware may be achieved, e.g., by deleting the first firmware - e.g., by overwriting the first firmware with randomized data or with the second firmware, etc. - or locking subsequent repetition of said executing of the first firmware in any other manner.

By such techniques, it is possible to deploy the generic first firmware which is not uniquely associated with the processor circuitry by writing the same to the non-volatile memory. The first firmware serves as a basis for subsequent generation of the second firmware. For this purpose, it may be possible to additionally deploy the third firmware from which the second firmware is generated. In other examples, the second firmware may be directly generated from the first firmware; in such scenarios, there is no need to additionally deploy the third firmware. Hence, a plurality of processor circuitries of a plurality of devices can be deployed with the same first firmware (and, optionally, third firmware) and generation of the second firmware can occur automatically and autonomously based on executing the first firmware. This simplifies fabrication, because a standard, non-unique first firmware (and, optionally, third firmware) can be deployed on a plurality of devices, each having a respective processor circuitry.

Furthermore, such techniques can be combined with hardware-specific security measures such as cryptographic keys which are uniquely associated with the respective processor circuitry, hardware-encoded features such as fuses or other intrinsic parameters of the hardware of the processor circuits such as use of physical unclonable functions. Because the second firmware is generated based on executing the first firmware on the processor circuitry itself, such hardware-specific features can be easily taken into account, without a need of signaling control data to a central server facility, etc. This also mitigates an attack vector which is based on interception of such control data.

The techniques described herein are not limited to hardware-specific security measures. In other words, it is not mandatory that the second firmware is uniquely associated with the respective processor circuitry. The techniques described herein can also be employed for use cases relying on processor circuitry which does not offer hardware-unique features. However, if such hardware-specific features are available, the techniques described herein enable simpler implementation of complex security measures by using the generic first firmware or third firmware, e.g., encryption of the first firmware or third firmware to generate the second firmware based on a cryptographic key uniquely associated with the processor circuitry. Once generated, the second firmware is then protected against unauthorized reproduction and execution on other processor circuitries. By removing or otherwise disabling further repetition of execution of the first firmware, it can also be ensured that the first firmware is not misused at a later point in time, e.g., during regular operation of the respective device at runtime. Optionally, execution of the third firmware may also be disabled.

Generally, it is possible that the techniques described herein are implemented in connection with reference implementations of protecting firmware such as a secure boot process. Such reference implementations of the secure boot process may, e.g., rely on a signed boot loader and/or a signed kernel. Then, the techniques described herein may enhance the secure boot process e.g., by adapting a partition of the first firmware which includes the runtime environment for executing application executables and, optionally, not adapting partitions of the first firmware including the - already protected - boot loader and kernel.

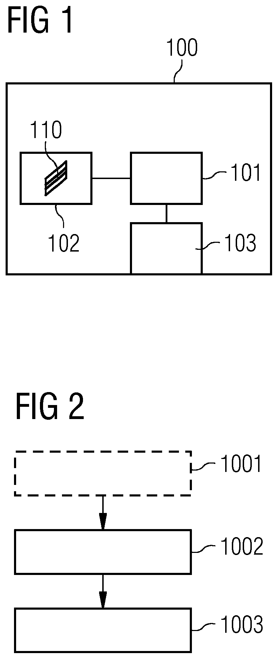

Fig. 1 illustrates aspects associated with a device 100 that may benefit from the techniques described herein of deploying firmware. The device 100 includes a processor circuitry 101, e.g., a microcontroller, an application-specific integrated circuit, a central processing unit, or the like. The device 100 also includes a non-volatile memory 102. Finally, the device 100 includes an interface 103, albeit generally the interface 103 is optional.

Firmware 110 is stored by the memory 102. Firmware 110 may enable operation of the device 100. For example, the firmware 110 may help to operate hardware modules of the device 100 (not illustrated in Fig. 1) such as peripheral devices, human machine interfaces, sensors, or actuators. For example, the firmware 110 may include a boot loader and a kernel and a runtime environment for executing application executables that may also be stored in the memory 102.

Hereinafter, techniques are described which avoid unauthorized tampering with the firmware 110. For example, according to some techniques described herein, unauthorized reproduction of the firmware 110 for execution on other processor circuitry may be avoided. According to some examples, compromising privacy of the device 100 by unauthorized modification of the firmware 110 may be prevented.

Fig. 2 is a flowchart of a method according to various examples. For example, the method according to Fig. 2 may be executed by the processor circuitry 101 of the device 100. The method according to Fig. 2 relates to techniques of deploying firmware. In Fig. 2, techniques are described which help to deploy firmware which is uniquely characterized, e.g., by including hardware-specific features or a unique identifier. The method of Fig. 2 involves decentralized deployment. Here, the unique characteristic of the firmware is not centrally pre-processed, but rather implemented in a decentralized manner at the respective target devices.

At block 1001, the first firmware is written to non-volatile memory. Block 1001 is optional. The first firmware may be written via an external interface of a respective device. For example, the first firmware may be generic. Hence, the first firmware may not be uniquely adapted. The first firmware may be written to the memory from a central server facility. The central server facility may provide the same first firmware for a plurality of processor circuitries and to a plurality of respective devices.

Optionally, at block 1001, a third firmware - which is different from the first firmware - may be written to the non-volatile memory.

Then, in block 1002, the first firmware is loaded and executed. Loading and executing the first firmware may include loading a boot loader of the first firmware and then, based on the boot loader, loading a kernel of the first firmware. In some examples, it is possible that the first firmware does not provide a runtime environment for executing application executables. This intrinsically limits the functionality of the first firmware. In other examples, it would also be possible that the runtime environment of the first firmware only provides limited functionality - e.g., if compared to a second firmware which is subsequently generated.

In block 1003, the second firmware is generated. Hence, the second firmware may be generated in block 1003 in response to loading a kernel of the first firmware. The second firmware may provide more functionality to the processor circuitry if compared to the first firmware. For example, a runtime environment of the second firmware may provide for execution of application executables - while the same may not be possible or only possible to a limited degree using the first firmware. The purpose of the first firmware may be limited to enabling generation of the second firmware.

The second firmware is generated. This generation of the second firmware is based on executing the first firmware. Hence, the first firmware provides for the functionality required for generating the second firmware.

As a general rule, there are various options available for generating the second firmware.

In a first option, the second firmware is generated from the first firmware. For example, the second firmware may be generated by adapting the first firmware. For example, the second firmware may be generated by embedding control data into the first firmware. For example, the second firmware may be generated by encrypting the first firmware.

In a second option, the second firmware is generated from the third firmware. For this purpose, the third firmware may be loaded - at 1003 and based on functionality provided by the first firmware - from the memory 102. Alternatively, the first firmware may be retrieved - at 1003 and based on functionality provided by the first firmware - via the interface 103. For example, the second firmware may be generated by embedding control data into the third firmware. For example, the second firmware may be generated by encrypting the third firmware.

In particular, it may be possible that the second firmware is generated such that it is uniquely identified, i.e., different from other instances of the second firmware that are generated by one or more other processor circuitries. This may include having the second firmware uniquely associated with the respective processor circuitry, while the first firmware and/or the third firmware is not uniquely associated with the processor circuitry. Generally, the first firmware and/or the third firmware may be generic, i.e., not uniquely identified.

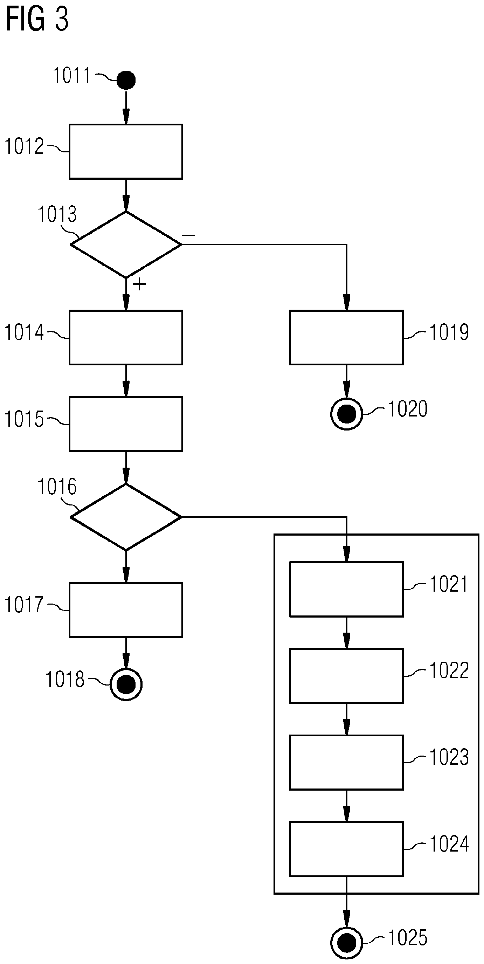

Fig. 3 is a flowchart of a method according to various examples. For example, the method according to Fig. 3 could be executed by the processor circuitry 101 of the device 100. The method commences with block 1011.

In block 1012, the integrity of a first firmware that is loaded from a non-volatile memory is verified. For example, this may include secure boot process techniques according to reference implementations. Specifically, it would be possible that a boot loader and kernel of the first firmware are verified.

At block 1013, it is checked whether the integrity verification of the first firmware has been successful. If this is not the case, then, at block 1019, execution of the first firmware is aborted and the method stops at 1020. However, if at block 1013 it is judged that the boot loader and the kernel or, generally, the integrity of the first firmware could be successfully verified at 1012, the method commences with block 1014.

At 1014, the kernel of the first firmware is loaded and executed. It is the task of the kernel of the first firmware to generate a second firmware. The second firmware may be generated from the first firmware; alternatively or additionally, the second firmware may be generated from the third firmware. At block 1015, it is checked whether such generation of the second firmware has already occurred - e.g., in a previous boot process or iteration of the method. Such checking at block 1015 can be implemented in different manners. For example, successful completion of execution of the first firmware - and thereby successful completion of the generation of the second firmware - maybe hardware-encoded into the processor circuitry, e.g., by using burnt fuses. Generally, a respective indicator may be set, e.g., using a dedicated partition header. Information whether the generation of the second firmware has already completed may be stored in a persistent manner or maybe derivable from persistently stored data. It can be helpful to protect such data against changes in subsequent operation. Further examples of checking whether generation of the second firmware has already completed include detecting presence of an external input signal associated with executing of the first firmware for the purpose of generating the second firmware. Block 1015 is optional. In some examples, the first firmware may be deleted upon execution; then, it is not necessary to check, at block 1015, whether the first firmware has already been executed.

Then, at 1016 it is judged whether the checking of block 1015 yields that the first firmware has already been executed and, consequently, the second firmware has been successfully generated; in this case, at block 1017, the second firmware is executed and normal operation of the processor circuitry and the associated device commences. The method stops at 1018.

If, however, at block 1016 it is judged that the first firmware has not been executed previously, the method commences at block 1021.

At block 1021, the second firmware is generated based on said executing of the first firmware.

At block 1021, different techniques for generating the second firmware may be used. For example, it would be possible to encrypt the first firmware using a cryptographic key uniquely associated with the processor circuitry to generate the second firmware. It would also be possible to encrypt a third firmware using the cryptographic key uniquely associated with the processor circuitry. Such a hardware-specific binding of the second firmware implements a copy protection for the second firmware. By encrypting, further, privacy of the data can be facilitated. Further, implications of off-line manipulations can be reduced.

In a further example, it would be possible to generate the second firmware without uniquely associating the second firmware with the processor circuitry. Thereby, the techniques are not dependent on hardware-specific features. However, if available, hardware-specific features can be used for generating the second firmware. This provides versatility to the techniques disclosed herein.

One example of generating the second firmware includes generating control data based on the first firmware and/or the third firmware and embedding the control data in the first firmware to generate the second firmware. For example, the control data may include a unique public key for verifying integrity of the second firmware. For example, application executables implemented based on a runtime environment of the second firmware may implement such an integrity validation based on the embedded public key at runtime.

For example, it would be possible to sign control data embedded in the second firmware using a unique private cryptographic key. For example, the private cryptographic key may be uniquely associated with the processor circuitry or maybe otherwise unique, e.g., by means of a respective identifier. Then, the control data may be verifiable using a public cryptographic key. The public cryptographic key may be embedded in the first firmware and/or the third firmware when generating the second firmware at block 1021. Hence, generally, control data embedded into the first firmware and/or the third firmware when generating the second firmware may or may not be uniquely associated with the processor circuitry. The control data may include a checksum of the first firmware and/or the third firmware.

Generally, when generating the second firmware, any secure boot process already associated with the first firmware and/or the third firmware - from which the first firmware is generated - may be preserved. For example, the first firmware and/or the third firmware may be protected by a secure boot process by providing control data for verifying the integrity of a partition of the first firmware and/or the third firmware including the boot loader and the kernel, as discussed in connection with blocks 1012, 1013. Then, when generating the second firmware from the first firmware and/or the third firmware, a partition of the first firmware and/or the third firmware including the boot loader and the kernel may not be adapted, in order to avoid any inconsistency with the pre-provision secure boot process. On the other hand, it would be possible that a partition of the first firmware and/or the third firmware is adapted when generating the second firmware which includes a runtime environment for executing application executables. Thereby, the secure boot process can be extended and augmented by the techniques described herein.

Then, in response to said generating of the second firmware at block 1021, at blocks 1022 and 1023 further repetitions of said executing of the first firmware are disabled. Hence, appropriate measures can be taken in blocks 1022 and 1023 such that by subsequent repetition of block 1015 when executing the second firmware, completed adaptation of the first firmware is successfully identified.

For example, at block 1022, completed execution of the first firmware and completed generation of the second firmware may be marked. For example, a special data file may be generated as a respective marker. Presence of this data file can indicate in subsequent execution of block 1015 generation of the second firmware has been completed. It would also be possible that any data associated with the first firmware is deleted - e.g., by overwriting the data - and only data associated with the second firmware is maintained. In other words, data only associated with the generic first firmware may be replaced by data associated with the unique second firmware. Further, hardware-encoding of the completed execution of the first firmware is also possible, e.g., by burning a fuse of the processor circuit to statically fix such a marker.

At block 1023, the first firmware is blocked, deactivated or deleted. In one option, block 1023 may be provided for by the first firmware, i.e., based on said executing of the first firmware. In another option (not illustrated in Fig. 3), it would be possible that deleting of the first firmware at block 1023 is performed based on said executing of the second firmware, e.g., in the next boot process of the second firmware.

At block 1024, a reboot of the processor circuitry is performed, after the second firmware has been generated and, optionally, the first firmware has been deleted. Then, block 1011 and following are re-executed, this time based on the second firmware. When re-executing block 1015, completed generation of the second firmware is detected and, subsequently, block 1017 is performed. Block 1017 may include additional processes such as decryption of the encrypted second firmware, e.g., using a public key, etc.

Such techniques as presented above may be implemented in a protected environment, e.g., at the fabrication or directly at the end user, depending on the requirements of the procedure for generating the second firmware.

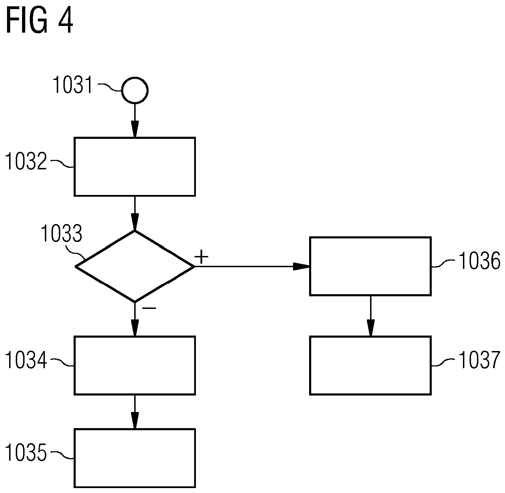

Fig. 4 is a flowchart of a method according to various examples. For example, the method according to Fig. 4 could be executed by the processor circuitry 101 of a device 100 according to the example of Fig. 1. The corresponding processor circuitry may provide for a secure boot process having a signed boot loader and kernel. For example, a Linux kernel may be used with support of SE Linux as runtime integrity mechanism.

At block 1031, a power on reset is performed. Then, a secure boot verification using a kernel of a first firmware is performed at 1032. This may include verifying if a public key for verifying the SE Linux policy is present. At block 1033, it is checked whether adaptation of the first firmware has already occurred, i.e., it is checked whether the second firmware has already been generated. This may include checking if control data such as runtime integrity reference integrity data has been embedded into the first firmware or not. If this is not the case, the iteration of block 1033 corresponds to the first boot such that signed reference values for the SE Linux policy and associated hardware-specific encryption keys have to be generated. This is done by executing block 1034. Executing block 1034 corresponds to starting the boot strapping process by executing the first firmware for adapting the first firmware to generate the second firmware. Specifically, at block 1034, a public encryption key and private encryption key, forming a pair, are generated. The public encryption key can only be used by a specific user or process of the system later on. The current SE Linux policy is loaded into the kernel. Then, control data in the form of runtime integrity reference integrity data are loaded and generated by calculating a checksum of the current policy configuration, e.g., policy data or enforce status. The runtime integrity reference integrity data are then signed using a generated private key. The public key and the signed runtime integrity reference integrity data are embedded into the first firmware, thereby generating the second firmware. Finally, at block 1035 a reboot of the processor circuitry is performed.

Then block 1031 is re-executed. Hence, at block 1032, the firmware is loaded again, this time the second firmware which has been previously generated. Again, it is checked whether a public key for use of SE Linux policy verification and runtime integrity reference integrity data are embedded into the second firmware, at block 1033. Since this is the case now, block 1036 is executed. Here, a partition including the first firmware is overwritten using randomly generated data and, thereby, disabled. The private encryption key is deleted. Thereby, further repetitions of executing the first firmware are disabled. At block 1037, the second firmware is executed. The loaded SE Linux policy can only be verified by a particular user/process of the firmware using the public key and the signed runtime integrity reference integrity data embedded into the second firmware.

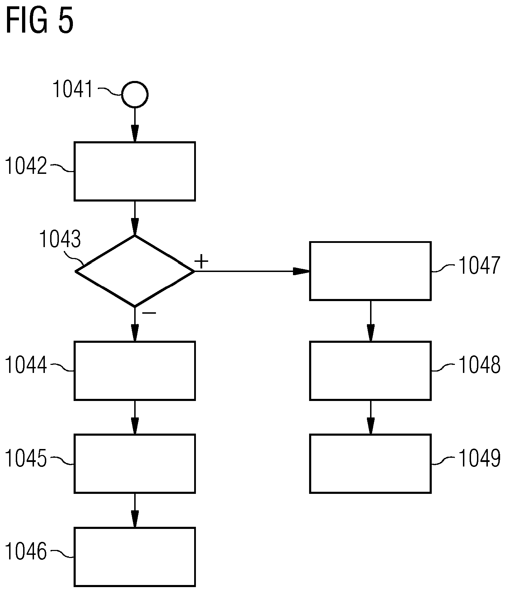

As will be appreciated from the example of Fig. 4, there is no hardware-specific adaptation of the first firmware; and, hence, the second firmware is not uniquely associated with the respective processor circuitry. Rather, a unique second firmware is generated by calculating the checksum of the current policy configuration such as the policy data and the enforce status. Generally, the various examples described herein may benefit from such techniques of uniquely adapting the firmware. Fig. 5 illustrates a corresponding example where the second firmware is generated such that it is uniquely associated with the respective processor circuitry, i.e., is hardware specific.

Fig. 5 is a flowchart of a method according to various examples. For example, the method according to Fig. 5 could be executed by the processor circuitry 101 of a respective device 100. In the example of Fig. 5, the processor circuitry includes hardware-specific security modules, e.g., a crypto module and a secure memory module having a key block load function.

Block 1041 corresponds to block 1031, i.e., power on reset.

At block 1042, a secure boot process verification is executed. This may include verifying integrity of a boot loader and a kernel of the first firmware.

Next, at block 1043, a header of the first firmware is checked to determine whether adaptation of the first firmware for generating the second firmware by encryption of the first firmware has already been performed. If there is no encryption of the first firmware, the first boot process is present such that adaptation of the first firmware for generating the second firmware is to be performed. In the example of Fig. 5, this occurs by executing block 1044. At block 1044, the first firmware is executed and based on said executing, a random encryption key for encrypting of the first firmware is generated. Then, a key blob is generated for the secure persistent storage of the encryption key using the crypto module and the secure memory component of the processor circuitry. This key blob is then written to a dedicated key blob partition. The key blob and the crypto/key blob functionality and respective tools are used for encrypting the system software partition. Then, at block 1045, completion of the generation of the second firmware by encrypting the first firmware is marked, e.g., by adapting or setting up a specific partition information as header of the second firmware. At block 1046, a reboot of the system is performed.

Next, 1041 is re-executed. Again, at 1042, a verification of the secure boot process is performed. Then, at 1043, the header of the second firmware is checked to determine that it has been adapted by encryption of the first firmware. Since the second firmware is encrypted, block 1047 is executed. Here, the partition of the first firmware is overwritten by random data and thereby disabled. At block 1048, the key blob and the crypto/key blob functionality is used for decrypting the second firmware and finally, at 1049, the second firmware which is uniquely associated with the respective processor circuitry is executed.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various examples have been described above in which a one-time executable first firmware is executed for generating a second firmware; specifically, the second firmware may be generated from the first firmware itself. It would also be possible to generate the second firmware from a third firmware which is not being executed when generating the second firmware.

## Claims

1. A method of operating a processor circuitry (101), comprising:
- loading, from a memory (102), a first firmware (110) and executing the first firmware (110),
- generating a second firmware (110) and writing the second firmware (110) to the memory (102), and
- in response to said generating of the second firmware (110): disabling further repetitions of said executing of the first firmware (110),
**characterized in that**
the second firmware (110) is uniquely associated with the processor circuitry (101),
generating the second firmware (110) from the first firmware (110) is based on an adaption of the executed first firmware (110),
the memory (102) is a non-volatile memory, and
the first firmware (110) is not uniquely identified and the second firmware (110) is uniquely identified.

2. The method of claim 1,
wherein the first firmware (110) is not uniquely associated with the processor circuitry (101).

3. The method of any one of the preceding claims, further comprising:
- encrypting the first firmware (110) or using a cryptographic key uniquely associated with the processor circuitry (101) to generate the second firmware (110).

4. The method of any one of the preceding claims, further comprising:
- generating control data based on the first firmware (110), and
- embedding the control data in the first firmware (110) to generate the second firmware (110).

5. The method of claim 4,
wherein the control data is signed using a private cryptographic key which may be uniquely associated with the processor circuitry (101),
wherein the control data is verifiable using a public cryptographic key.

6. The method of claim 5, further comprising:
- embedding the public cryptographic key in the first firmware (110) to generate the second firmware (110).

7. The method of any one of claims 4 - 6,
wherein the control data is uniquely associated with the processor circuitry (101).

8. The method of any one of claims 4 - 7,
wherein the control data comprises a checksum of the first firmware (110).

9. The method of any one of claims 4 - 8,
wherein the control data comprises a cryptographic key for encryption of application executables to be executed in a runtime environment provided by the second firmware (110) and/or for encryption of application data associated with the application executables.

10. The method of any one of the preceding claims,
wherein said disabling of the further repetition comprises at least one of deleting the first firmware (110) from the non-volatile memory (102), hardware-encoding completed execution of the first firmware (110) into the processor circuitry (101), and disconnecting an external input signal associated with said executing of the first firmware (110).

11. The method of any one of the preceding claims,
wherein the second firmware (110) is generated by adapting a partition of the first firmware (110) comprising a runtime environment for executing application executables, and optionally by not adapting partitions of the first firmware (110) comprising a bootloader and a kernel.

12. The method of any one of the preceding claims, further comprising:
wherein the second firmware (110) is generated in response to loading a kernel of the first firmware (110).

13. The method of any one of the preceding claims,
wherein the first firmware provides limited functionality to the processor circuitry if compared to the second firmware.

14. A processor circuitry (101) configured to:
- load, from a memory (102), a first firmware (110) and executing the first firmware (110),
- generate a second firmware (110) and write the second firmware (110) to the memory (102), and
- in response to said generating of the second firmware (110): disable further repetitions of said executing of the first firmware (110),
**characterized in that** the processor circuitry (101) is further configured to:
- generate the second firmware (110) from the first firmware (110) based on an adaption of the executed first firmware (110),
wherein the second firmware (110) is uniquely associated with the processor circuitry (101),
wherein the memory is a non-volatile memory (102), and
wherein the first firmware (110) is not uniquely identified and the second firmware (110) is uniquely identified.

## Patentansprüche

1. Verfahren zum Betreiben von Prozessorschaltungen (101), das Folgendes umfasst:
- Laden einer ersten Firmware (110) aus einem Speicher (102) und Ausführen der ersten Firmware (110),
- Erzeugen einer zweiten Firmware (110) und Schreiben der zweiten Firmware (110) in den Speicher (102) und
- als Reaktion auf das Erzeugen der zweiten Firmware (110): Einstellen weiterer Wiederholungen des Ausführens der ersten Firmware (110),
**dadurch gekennzeichnet, dass**
die zweite Firmware (110) eindeutig mit den Prozessorschaltungen (101) verknüpft ist,
das Erzeugen der zweiten Firmware (110) aus der ersten Firmware (110 auf einer Anpassung der ausgeführten ersten Firmware (110) beruht,
es sich bei dem Speicher (102) um nichtflüchtigen Speicher handelt und
die erste Firmware (110) nicht eindeutig und die zweite Firmware (110) eindeutig identifiziert ist.

2. Verfahren nach Anspruch 1,
wobei die erste Firmware (110) nicht eindeutig mit den Prozessorschaltungen (101) verknüpft ist.

3. Verfahren nach einem der vorhergehenden Ansprüche, das ferner Folgendes umfasst:
- Verschlüsseln der ersten Firmware (110) oder Benutzen eines eindeutig mit den Prozessorschaltungen (101) verknüpften kryptografischen Schlüssels zum Erzeugen der zweiten Firmware (110) .

4. Verfahren nach einem der vorhergehenden Ansprüche, das ferner Folgendes umfasst:
- Erzeugen von Steuerdaten auf der Grundlage der ersten Firmware (110) und
- Einbetten der Steuerdaten in die erste Firmware (110) zum Erzeugen der zweiten Firmware (110).

5. Verfahren nach Anspruch 4,
wobei die Steuerdaten unter Verwendung eines privaten kryptografischen Schlüssels signiert werden, der eindeutig mit den Prozessorschaltungen (101) verknüpft sein kann,
wobei die Steuerdaten unter Verwendung eines öffentlichen kryptografischen Schlüssels verifizierbar sind.

6. Verfahren nach Anspruch 5, das ferner Folgendes umfasst:
- Einbetten des öffentlichen kryptografischen Schlüssels in die erste Firmware (110) zum Erzeugen der zweiten Firmware (110) .

7. Verfahren nach einem der Ansprüche 4 - 6,
wobei die Steuerdaten eindeutig mit den Prozessorschaltungen (101) verknüpft sind.

8. Verfahren nach einem der Ansprüche 4 - 7,
wobei die Steuerdaten eine Prüfsumme der ersten Firmware (110) umfassen.

9. Verfahren nach einem der Ansprüche 4 - 8,
wobei die Steuerdaten einen kryptografischen Schlüssel für die Verschlüsselung von ausführbaren Anwendungsprogrammen, die in einer von der zweiten Firmware (110) bereitgestellten Laufzeitumgebung ausgeführt werden sollen, und/oder für die Verschlüsselung von mit den ausführbaren Anwendungsprogrammen verknüpften Anwendungsdaten umfassen.

10. Verfahren nach einem der vorhergehenden Ansprüche,
wobei das Einstellen der weiteren Wiederholung das Löschen der ersten Firmware (110) aus dem nichtflüchtigen Speicher (102), das hardwareseitiges Codieren einer abgeschlossenen Ausführung der ersten Firmware (110) in die Prozessorschaltungen (101) und/oder das Trennen eines mit dem Ausführen der ersten Firmware (110) verknüpften externen Eingangssignals umfasst.

11. Verfahren nach einem der vorhergehenden Ansprüche,
wobei die zweite Firmware (110) durch Anpassen eines Teils der ersten Firmware (110), der eine Laufzeitumgebung für das Ausführen von ausführbaren Anwendungsprogrammen umfasst, und wahlweise nicht erfolgendes Anpassen von Teilen der ersten Firmware (110) erzeugt wird, die einen Bootloader und einen Kernel umfassen.

12. Verfahren nach einem der vorhergehenden Ansprüche, das ferner Folgendes umfasst:
wobei die zweite Firmware (110) als Reaktion auf das Laden eines Kernels der ersten Firmware (110) erzeugt wird.

13. Verfahren nach einem der vorhergehenden Ansprüche,
wobei die erste Firmware im Vergleich zur zweiten Firmware einen begrenzten Funktionsumfang für die Prozessorschaltungen bereitstellt.

14. Prozessorschaltungen (101), die so konfiguriert sind, dass sie:
- aus einem Speicher (102) eine erste Firmware (110) laden und die erste Firmware (110) ausführen,
- eine zweite Firmware (110) erzeugen und die zweite Firmware (102) in den Speicher (102) schreiben und
- als Reaktion auf das Erzeugen der zweiten Firmware (110): weitere Wiederholungen des Ausführens der ersten Firmware (110) einstellen,
**dadurch gekennzeichnet, dass** die Prozessorschaltungen (101) ferner so konfiguriert sind, dass sie:
- die zweite Firmware (110) auf der Grundlage einer Anpassung der ausgeführten ersten Firmware (110) aus der ersten Firmware (110) erzeugen,
wobei die zweite Firmware (110) eindeutig mit den Prozessorschaltungen (101) verknüpft ist,
wobei es sich bei dem Speicher um nichtflüchtigen Speicher (102) handelt und
wobei die erste Firmware (110) nicht eindeutig und die zweite Firmware (110) eindeutig identifiziert ist.

## Revendications

1. Procédé d'actionnement d'un ensemble de circuits de processeur (101), comprenant :
- le chargement, à partir d'une mémoire (102), d'un premier micrologiciel (110) et l'exécution du premier micrologiciel (110),
- la génération d'un deuxième micrologiciel (110) et l'écriture du deuxième micrologiciel (110) vers la mémoire (102), et
- en réponse à ladite génération du deuxième micrologiciel (110) : la désactivation de répétitions supplémentaires de ladite exécution du premier micrologiciel (110),
**caractérisé en ce que**
le deuxième micrologiciel (110) est associé de manière unique à l'ensemble de circuits de processeur (101),
la génération du deuxième micrologiciel (110) à partir du premier micrologiciel (110) est basée sur une adaptation du premier micrologiciel exécuté (110),
la mémoire (102) est une mémoire non volatile, et
le premier micrologiciel (110) n'est pas identifié de manière unique et le deuxième micrologiciel (110) est identifié de manière unique.

2. Procédé selon la revendication 1,
dans lequel le premier micrologiciel (110) n'est pas associé de manière unique à l'ensemble de circuits de processeur (101) .

3. Procédé selon l'une quelconque des revendications précédentes, comprenant en outre :
- le chiffrement du premier micrologiciel (110) ou l'utilisation d'une clé de chiffrement associée de manière unique à l'ensemble de circuits de processeur (101) de façon à générer le deuxième micrologiciel (110).

4. Procédé selon l'une quelconque des revendications précédentes, comprenant en outre :
- la génération de données de commande en fonction du premier micrologiciel (110), et
- l'imbrication des données de commande dans le premier micrologiciel (110) pour générer le deuxième micrologiciel (110) .

5. Procédé selon la revendication 4,
dans lequel les données de commande sont signées au moyen d'une clé de chiffrement privée qui peut être associée de manière unique à l'ensemble de circuits de processeur (101),
dans lequel les données de commande sont vérifiables au moyen d'une clé de chiffrement publique.

6. Procédé selon la revendication 5, comprenant en outre :
- l'imbrication de la clé de chiffrement publique dans le premier micrologiciel (110) pour générer le deuxième micrologiciel (110).

7. Procédé selon l'une quelconque des revendications 4 à 6,
dans lequel les données de commande sont associées de manière unique à l'ensemble de circuits de processeur (101).

8. Procédé selon l'une quelconque des revendications 4 à 7,
dans lequel les données de commande comprennent une somme de contrôle du premier micrologiciel (110).

9. Procédé selon l'une quelconque des revendications 4 à 8,
dans lequel les données de commande comprennent une clé de chiffrement destinée au chiffrement d'exécutables d'application à exécuter dans un environnement d'exécution fourni par le deuxième micrologiciel (110) et/ou destinée au chiffrement de données d'application associées aux exécutables d'application.

10. Procédé selon l'une quelconque des revendications précédentes,
dans lequel ladite désactivation de la répétition supplémentaire comprend au moins une opération parmi la suppression du premier micrologiciel (110) de la mémoire non volatile (102), le codage par matériel d'une exécution réalisée du premier micrologiciel (110) vers l'ensemble de circuits de processeur (101), et la déconnexion d'un signal en entrée externe associé à ladite exécution du premier micrologiciel (110).

11. Procédé selon l'une quelconque des revendications précédentes,
dans lequel le deuxième micrologiciel (110) est généré par l'adaptation d'une partition du premier micrologiciel (110) comprenant un environnement d'exécution destiné à l'exécution d'exécutables d'application, et éventuellement par la non-adaptation de partitions du premier micrologiciel (110) comprenant un programme d'amorçage et un noyau.

12. Procédé selon l'une quelconque des revendications précédentes, comprenant en outre :
dans lequel le deuxième micrologiciel (110) est généré en réponse au chargement d'un noyau du premier micrologiciel (110) .

13. Procédé selon l'une quelconque des revendications précédentes,
dans lequel le premier micrologiciel fournit une fonctionnalité limitée à l'ensemble de circuits de processeur en comparaison du deuxième micrologiciel.

14. Ensemble de circuits de processeur (101) configuré pour :
- charger, à partir d'une mémoire (102), un premier micrologiciel (110) et exécuter le premier micrologiciel (110),
- générer un deuxième micrologiciel (110) et écrire le deuxième micrologiciel (110) vers la mémoire (102), et
- en réponse à ladite génération du deuxième micrologiciel (110) : désactiver des répétitions supplémentaires de ladite exécution du premier micrologiciel (110),
**caractérisé en ce que** l'ensemble de circuits de processeur (101) est configuré en outre pour :
- générer le deuxième micrologiciel (110) à partir du premier micrologiciel (110) en fonction d'une adaptation du premier micrologiciel exécuté (110),
dans lequel le deuxième micrologiciel (110) est associé de manière unique à l'ensemble de circuits de processeur (101),
dans lequel la mémoire est une mémoire non volatile (102), et
dans lequel le premier micrologiciel (110) n'est pas identifié de manière unique et le deuxième micrologiciel (110) est identifié de manière unique.
